# EUROPEAN PATENT APPLICATION

(11) **EP 2 058 051 A1**
(43) Date of publication of application: **13.05.2009**
(21) Application number: 08168226.2
(22) Date of filing: 04.11.2008
(51) Int. Cl.: B01L 3/00, G01N 7/14, G01N 30/06

(54) **Liquid sample holder**

(30) Priority: 12.11.2007 US 987296 P; 20.10.2008 US 254788
(71) Applicant: HY-Energy LLP, Newark, CA 94560 (US)
(72) Inventor: GROSS, Karl, Fremont, CA 94555 (US)
(74) Representative: Feray, Valérie

(57) **Abstract**

A liquid sample holder (100) prevents the removal of liquid or vapor portions of a sample material from a sample reservoir (101) when a working fluid is desorbed from the sample material. The apparatus includes a sample reservoir (101) and a liquid trap (102), both of which are contained in a housing (103). The liquid trap (102) is positioned above the sample reservoir (101), and a flow path is configured to fluidly couple the sample reservoir (101) to a gas port (106) located in an upper portion of the housing (103) by passing through the liquid trap (102). The liquid trap (102) may include a baffle assembly, a porous mesh of high surface area material, or a combination of both.

## Description

### CROSS-REFERENCE TO RELATED APPLICATIONS

This application claims the priority benefit of the U.S. Provisional Patent Application filed on June 15, 2007 and having serial number 60/987,296. The subject matter of this related application is hereby incorporated herein by reference.

### BACKGROUND OF THE INVENTION

### Field of the Invention

Embodiments of the present invention relate generally to gas sorption and desorption from a sample material, and particularly to a liquid sample holder for gas-sorbing materials.

### Description of the Related Art

To analyze the gas sorption properties of a liquid, or to utilize a gas stored or dissolved in a liquid, it is sometimes desirable or necessary to separate a gas from the liquid. For example, there are liquids known in the art that can be used as a storage medium for hydrogen gas. As a gas desorbs from such a liquid storage medium, the liquid itself can be entrained in the flow of desorbed gas and transported out of the containment vessel containing the liquid storage medium, which is highly undesirable. First, the entrained liquid can contaminate analytical and other equipment that measures or processes the released gas. Cleaning, repairing and/or replacing such equipment is a time-consuming and expensive process. Second, as entrained liquid is removed from the containment vessel, the liquid storage medium is depleted, thereby reducing the total gas-sorbing capacity of the liquid and the accuracy of gas sorption analyses performed on the liquid, since an unknown mass of the entrained liquid is removed. Contamination of analytical equipment and depletion of a liquid or solid sample can also occur when components of a liquid or solid sample are volatilized during gas desorption, carried out of the liquid containment vessel in vapor phase, and condense outside the containment vessel and/or inside analytical equipment.

Accordingly, there is a need in the art for a liquid sample holder that prevents the removal of liquid or vapor portions of a sample material when a gas is desorbed from the sample material.

### SUMMARY OF THE INVENTION

One embodiment of the present invention sets forth a liquid sample holder design that prevents the removal of liquid or vapor portions of a sample material when a gas is desorbed from the sample material. The liquid sample holder may include a sample reservoir and a liquid trap, both of which are contained in a housing, and a gas path configured to fluidly couple the sample reservoir to a gas port located in an upper portion of the housing by passing through the liquid trap.

One advantage of the disclosed apparatus is that sorption testing of liquid sample materials can be performed without contaminating sorption testing equipment with liquid or vapor components of the liquid sample material.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 schematically illustrates a cross-sectional view of liquid sample holder, according to an embodiment of the invention.

Figure 2 illustrates an exploded view of a pressurization vessel assembly configured to contain a liquid sample holder, according to an embodiment of the invention.

Figure 3A schematically illustrates a cross-sectional view of a liquid sample holder having a liquid trap with a baffle assembly, according to an embodiment of the invention.

Figure 3B is an isometric view of a single baffle, according to an embodiment of the invention.

Figure 3C schematically illustrates a partial cross-sectional view of a baffle assembly and a liquid trap housing.

Figure 4 schematically illustrates a cross-sectional view of a liquid sample holder having a liquid trap with a high surface area material, according to an embodiment of the invention.

Figure 5 schematically illustrates a cross-sectional view of a liquid sample holder having a two-stage liquid trap, according to an embodiment of the invention.

Figure 6 schematically illustrates a cross-sectional view of a liquid sample holder having a remote second stage separator, according to an embodiment of the invention.

For clarity, identical reference numbers have been used, where applicable, to designate identical elements that are common between figures. It is contemplated that features of one embodiment may be incorporated in other embodiments without further recitation.

### DETAILED DESCRIPTION

Embodiments of the invention contemplate an apparatus that prevents the removal of liquid or vapor portions of a sample material from a sample reservoir when a working fluid is desorbed from the sample material. The apparatus includes a sample reservoir and a liquid trap, both of which are contained in a housing. The liquid trap is positioned above the sample reservoir, and a flow path is configured to fluidly couple the sample reservoir to a gas port located in an upper portion of the housing by passing through the liquid trap. In one embodiment, the liquid trap includes a baffle assembly. In another embodiment, the liquid trap includes a porous mesh of high surface area material. In yet another embodiment, the liquid trap includes a baffle assembly as a first stage and a mesh of high surface area material as a second stage. Depending on the sample material contained in the sample reservoir and the desorption temperature and pressure, the liquid trap configuration can be selected accordingly to prevent liquid and/or vapor components of the sample from exiting the housing, thereby separating the sample material from a working fluid desorbed from the sample material.

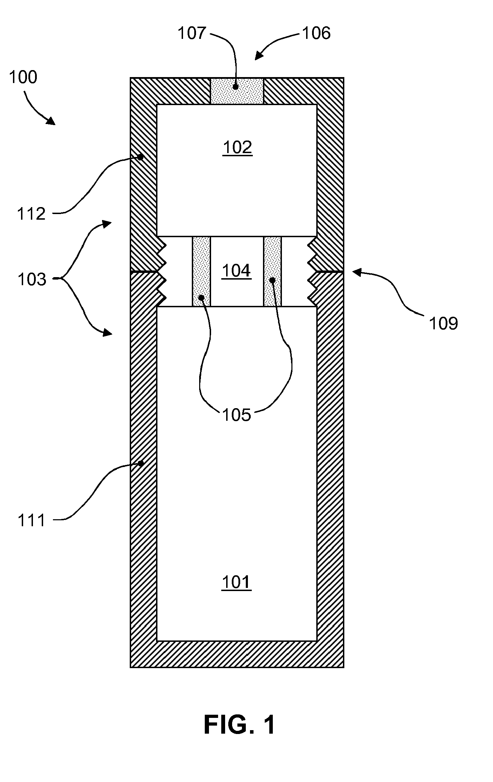

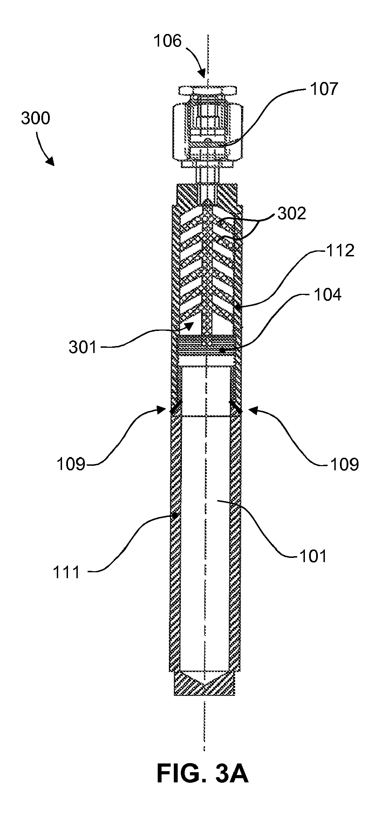

Figure 1 schematically illustrates a cross-sectional view of liquid sample holder 100, according to an embodiment of the invention. Liquid sample holder 100 includes a sample reservoir 101 and a liquid trap 102 contained in a housing 103. Sample reservoir 101 is configured to retain a liquid sample material capable of sorption and desorption of significant quantities of a gas. Gas sorption, as defined herein, includes the absorption, adsorption, desorption, chemisorption, physisorption, and/or dissolution of a gas on or into a sample material. Liquid trap 102 is positioned above sample reservoir 101 and creates an indirect flow path for a working fluid desorbed from a sample material in sample reservoir 101, where the working fluid may be a gas or supercritical fluid. The indirect flow path of liquid trap 102 allows a desorbed working fluid to exit housing 103 through gas port 106 while preventing liquid droplets entrained in the working fluid from exiting housing 103 through gas port 106. Embodiments of the invention contemplate a number of configurations of liquid trap 102 that do not allow entrained liquids to be carried with sufficient momentum through gas port 106 and out of liquid sample holder 100. The different configurations of liquid trap 102 are described below in conjunction with Figures 3A, 3B, 4, 5, and 6. Because liquid trap 102 is positioned above sample reservoir 101, some or all of the entrained liquid sample material captured by liquid trap 102 can drain downward back into sample reservoir 101.

With the exception of gas port 106, housing 103 is a sealed vessel and is constructed to be gas-tight and vacuum tight, even at the elevated temperatures and pressures associated with gas sorption testing. To that end, housing 103 may include specialized sealing members and surfaces between the constituent parts of housing 103. Such specialized sealing members and surfaces are known in the art, such as metal face-seal gaskets compressed against polished metal surfaces, i.e., VCR^{®} fittings, soft metal gaskets compressed against knife-edge seals, replaceable single-use gaskets, O-rings, etc. Similarly, gas port 106 is configured to be fluidly coupled in a gas-tight and vacuum-tight manner to external equipment via gas lines or conduits (not shown) by means known in the art, such as a VCR^{®} fitting. In this way, a working fluid desorbed from a sample material in sample reservoir 101 is directed to external equipment with no significant leakage occurring into or out of housing 103 or the fluid coupling connected to gas port 106. External equipment fluidly coupled to gas port 106 may include a Sieverts' device or other gas sorption analyzer, mass spectrometer, or gas chromatograph, among others. Even a small amount of leakage into or out of housing 103 or gas port 106 can significantly reduce the accuracy of the analysis performed by such analytical equipment.

In light of the above, housing 103 is constructed from stainless steel or other durable material not subject to outgassing and capable of undergoing the temperature and pressure changes that occur in sorption testing. Consequently, in one embodiment, the surface area of the opening of gas port 106 is minimized to avoid leakage when housing 103 is held at pressures greater than one atmosphere. In such an embodiment, the internal cross-section of housing 103 may be circular for greater mechanical strength, and the ratio of the length of housing 103 to the inner diameter of housing 103 may be as much as 10:1 or greater.

For ease of disassembly and cleaning, in one embodiment housing 103 can be disassembled into two or three components that are threaded together, including a liquid trap housing 112 and a reservoir housing 111. In such an embodiment, liquid trap housing 112 and reservoir housing 111 are threaded together and a seal is formed at interface 109. Liquid trap housing 112 and reservoir housing 111 may be threaded together in a male-female configuration, as shown in Figure 3A. Alternatively, as shown in Figure 1, a third component, i.e., separator 104, may be used as a threaded union between liquid trap housing 112 and reservoir housing 111. Liquid trap housing 112 and reservoir housing 111 may both be threaded onto separator 104 to form housing 103.

Liquid trap housing 112 and reservoir housing 111 and may each be formed from stainless steel tube welded to an end plate. Alternatively, liquid trap housing 112 and reservoir housing 111 may each be machined from a single piece of material. One skilled in the art can readily devise other manufacturing methods for housing 103 as described herein. The seal formed at interface 109 may include any sealing members and surfaces known in the art suitable for the high-temperature, high-pressure applications, *e.g*., VCR^{®} fittings, etc. Liquid trap housing 112 is configured to contain the components of liquid trap 102. Reservoir housing 111 forms sample reservoir 101 when assembled with liquid trap housing 112.

Prior to sorption testing, material samples are typically isolated from atmospheric moisture and other contaminants by being handled in a controlled environment, such as an argon-purged glove box or other isolation chamber. Because reservoir housing 111 is a separate structural element of housing 103 and can be readily threaded together with liquid trap housing 112 to form housing 103, the simple thread-together design of housing 103 facilitates the loading of a sample material into reservoir housing 111 and the subsequent assembly of housing 103 while contained in a glove box.

In one embodiment, housing 103 includes a separator 104 configured with flow restrictors 105, as shown in Figure 1. Separator 104 supports the structure of liquid trap 102, separates liquid trap 102 from sample reservoir 101, and may act as a first stage for separating a sample liquid entrained in a desorbed gas. Separator 104 may also act as a threaded union on which reservoir housing 111 and liquid trap housing 112 can be threaded to assembly housing 103. Separator 104 may be constructed of the same materials described above for housing 113. Flow restrictors 105 slow the flow of desorbed gas from reservoir 101 into liquid trap 102, thereby reducing the quantity of entrained liquid that enters liquid trap 102. In one embodiment, flow restrictors 105 may include one or more small-diameter orifices. In another embodiment, flow restrictors 105 are in-line gas filters, such as fritted sintered metal filters or metal filter gaskets known in the art. The appropriate material make-up and pore size of such sintered metal filters can be readily selected by one skilled in the art, depending on the sample material, working fluid, and desorption temperature and pressure.

In one embodiment, gas port 106 also includes a flow restrictor 107. Flow restrictor 107 slows the flow of desorbed gas from liquid trap 102 out of housing 103, thereby reducing the potential for entrained liquid to be forced out of housing 103. Flow restrictor 107 may include one or more small-diameter orifices or gas filters, substantially similar to flow restrictors 105, described above.

Because a sample material is retained within liquid sample holder 100 throughout each test, multiple tests may be performed on the same sample material without the need for disassembly or reloading of liquid sample holder 100. Thus, liquid sample holder 100 facilitates efficient and economical testing of the sorption properties of a sample material under many different conditions.

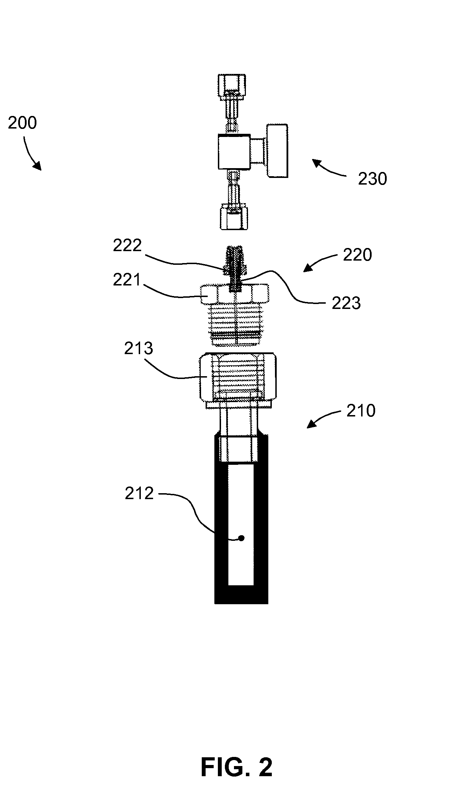

In one embodiment, liquid sample holder 100 may be directly coupled via gas port 106 to external analytical or gas utilization equipment, such as a Sievert's device or fuel cell, etc. In such an embodiment, liquid sample holder 100 acts as a pressurization vessel. Alternatively, liquid sample holder 100 may be inserted into a pressurization vessel after being loaded with a sample material. Figure 2 illustrates an exploded view of a pressurization vessel assembly 200 configured to contain a liquid sample holder, according to an embodiment of the invention. Pressurization vessel assembly 200 includes a pressure vessel 210, a reducer fitting 220, and an isolation valve 230. For clarity, portions of pressure vessel 210 and reducer fitting 220 are cross-sectioned in Figure 2. Pressure vessel 210 includes a threaded fitting 213 and an internal volume 212 configured to contain a liquid sample holder substantially similar to liquid sample holder 100 in Figure 1. In one embodiment, threaded fitting 213 is a standard 1" VCR^{®} fitting with an inner diameter of 0.75". In another embodiment, the internal cross-section of pressure vessel 210 is square, rectangular, or otherwise configured to accept a liquid sample holder. Pressure vessel 210 is configured to act as a pressure vessel for a liquid sample holder and is therefore constructed to withstand high temperatures and pressures and is made up of a durable material not subject to outgassing. Consequently, in one embodiment, the surface area of the opening of threaded fitting 213 is minimized to avoid leakage when pressure vessel 210 is held at pressures greater than one atmosphere. In such an embodiment, the internal cross-section of pressure vessel 210 may be circular for greater mechanical strength, and the ratio of the length of pressure vessel 210 to the inner diameter of pressure vessel 210 may be as much as 10:1 or greater. Reducer fitting 220 includes threaded fitting 221 adapted to mate with threaded fitting 213, and a reduced diameter fitting 222 mechanically coupled to threaded fitting 221 by an airtight connection, such as a welded connection 223. Isolation valve 230 fluidly couples and decouples pressure vessel 210 from analytical or other external equipment. Isolation valve 230 is a manual or automated shut-off valve, such as a diaphragm valve, and is configured for leak-free sealing in high-pressure applications.

Pressurization vessel assembly 200 is also designed for easy assembly and disassembly in a glove box or other isolation chamber, since separation of a single threaded connection provides access to a liquid sample holder. Because pressurization vessel assembly 200 serves as the pressure vessel for a liquid sample holder contained therein, the design requirements of such a liquid sample holder are significantly less stringent. A lighter weight liquid sample holder is advantageous since the mass of sample material contained therein can be more accurately measured with a lighter weight liquid sample holder. In addition, the insertion of a liquid sample holder in pressurization vessel 200 obviates the need for a high-pressure seal to be formed between the liquid trap housing and the reservoir housing of the liquid sample holder, such as the seal formed at interface 109 in Figure 1. Instead, the only resealable high-pressure seal required in pressurization vessel assembly 200 is between threaded fitting 221 and pressure vessel 210.

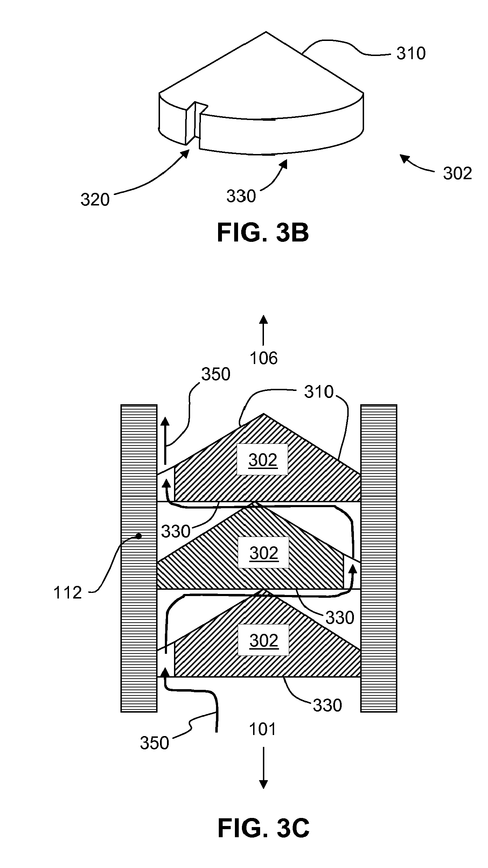

Figure 3A schematically illustrates a cross-sectional view of a liquid sample holder 300 having a liquid trap with a baffle assembly 301, according to an embodiment of the invention. Baffle assembly 301 includes a plurality of baffles 302 that together create an indirect flow path for a working fluid desorbing from a sample material contained in sample reservoir 101. Because the desorption process can be energetic and produce significant effervescence, i.e., a two-phase mixture of the working fluid and the sample material, droplets of the sample material can easily be entrained in the working fluid. The indirect flow path produced by the plurality of baffles 302 separates the liquid droplets from the working fluid by allowing the working fluid to exit liquid sample holder 300 through gas port 106 while preventing liquid droplets entrained in the working fluid from exiting liquid sample holder 300 through gas port 106. Separation of the working fluid and entrained droplets is due in part to the circuitous path between sample reservoir 101 and gas port 106 and in part to the positioning of multiple surfaces substantially opposed to the direction of liquid droplet flow, as illustrated in Figures 3B and 3C.

Figure 3B is an isometric view of a single baffle 302, according to an embodiment of the invention. Baffle 302 includes an upper angled surface 310, at least one gas flow opening 320, and a lower surface 330. Figure 3C schematically illustrates a partial cross-sectional view of baffle assembly 301 and liquid trap housing 112. Indirect flow path 350 passes around each baffle 302 by following a series of gas flow openings 320, as indicated. Viewed from above, each of gas flow openings 320 is positioned with an angular displacement with respect to each adjacent gas flow opening 320 by at least about 10°, *e*.*g*., by 90°, 135°, 180° other angles. In this way, no two adjacent gas flow openings 320 are aligned with each other and there is no direct gas flow path between sample reservoir 101 and gas port 106. Instead, entrained liquid droplets passing through gas flow opening 320 of one baffle 302 are directed toward lower surface 330 of the next baffle 302 and impinge thereon. Upper angled surface 310 is oriented to encourage liquid droplets to flow back downward toward sample reservoir 101 and away from gas port 106. No specific angle is required for upper angled surface 310 to perform this function as long as a downward angle is present as shown to direct liquid droplets collected on upper angled surface 310 of a baffle 302 toward gas flow opening 320 of the baffle 302.

In operation, the mass of sample material loaded in liquid sample holder 300 is determined by weighing liquid sample holder 300 before and after loading. Consequently, it is not necessary for all liquid droplets of the sample material to completely drain back to reservoir 101 for proper operation of liquid sample holder 300. As long as the original mass of sample material is contained somewhere inside liquid sample holder 300, *i*.*e*., in reservoir 101 and/or liquid trap 102, the entire mass of the sample material can be charged with a working fluid and the sample material cannot contaminate equipment coupled to liquid sample holder 300.

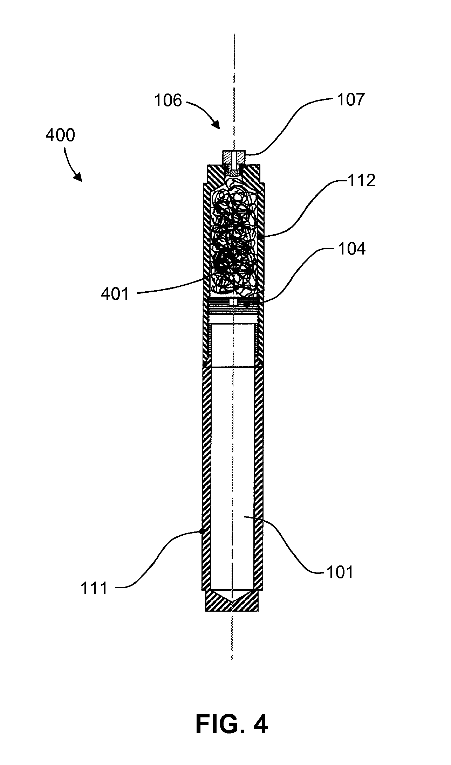

Figure 4 schematically illustrates a cross-sectional view of a liquid sample holder 400 having a liquid trap with a porous high surface area material 401, according to an embodiment of the invention. Porous high surface area material 401 may be any material compatible with the working fluid at the elevated temperatures typical of sorption testing, *e*.*g*., 300 °C or higher. The physical organization of porous high surface area material 401 is that of a porous mesh, powder, single block, or other high surface area arrangement that substantially fills liquid trap housing 112. Because porous high surface area material 401 is porous, the fluid flow path for a desorbed working fluid is directly through porous high surface area material 401. In this way, liquid droplets entrained in the working fluid are captured before the working fluid has exited gas port 106. In addition, porous high surface area material 401 may include an absorbent and/or adsorbent material to enhance the capture of entrained liquid. Because the fluid flow path for a working fluid passes directly through porous high surface area material 401, very small liquid droplets may be removed the working fluid, including droplets that are too small to have significant momentum relative to the working fluid and, thus, may not be removed by a baffle assembly, e.g., baffle assembly 301 of Figures 3A-C. Such droplets, which may be 10s of microns in diameter or smaller, may not impinge on surfaces of a baffle assembly when passing therethrough, since they are fully entrained in the working fluid.

In one embodiment, porous high surface area material 401 may be composed of an inert material, such as a steel, cotton, or polymer "wool" or mesh.
In another embodiment porous high surface area material 401 may include a mesh of one or more fibrous materials, either cohesively attached as one or more layers of a felt material, or loosely compressed in a bulk configuration. The fibrous material may include ceramic, polymeric, plant, and/or glass fibers. In one embodiment, porous high surface area material 401 may include materials that are selected to adsorb and/or chemically react with volatile contaminants released from the sample material, including ammonia, alcohols, carbon monoxide, boranes, silanes, and volatile hydrocarbons, among others. Chemically reactive absorbent/adsorbent materials that may make up some or all of porous high surface area material 401 include activated carbon, zeolites, salts, nano-carbon materials, metal organic frameworks, etc.

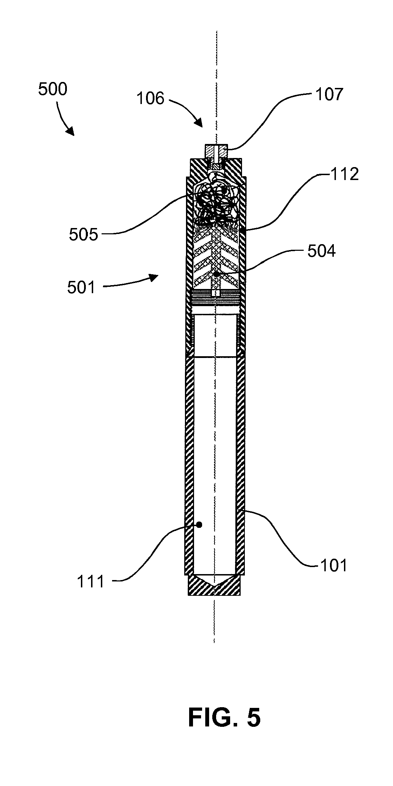

Figure 5 schematically illustrates a cross-sectional view of a liquid sample holder 500 having a two-stage liquid trap 501, according to an embodiment of the invention. Two-stage liquid trap 501 is housed in liquid trap housing 112 as shown and includes a baffle assembly 504 and a high surface area material 505. Baffle assembly 504 is substantially similar in make-up to baffle assembly 301 in Figure 3A. Baffle assembly 504 removes larger liquid droplets from the working fluid and therefore acts as a first stage of liquid droplet removal. High surface area material 505 is substantially similar in make-up to porous high surface area material 401 in Figure 4. High surface area material 505 removes smaller droplets remaining in the working fluid and acts as a second stage of liquid droplet removal. In one embodiment, high surface area material 505 includes adsorbent and/or chemically reactive material selected to remove volatile contaminants from the working fluid, i.e., volatilized components of a sample material.

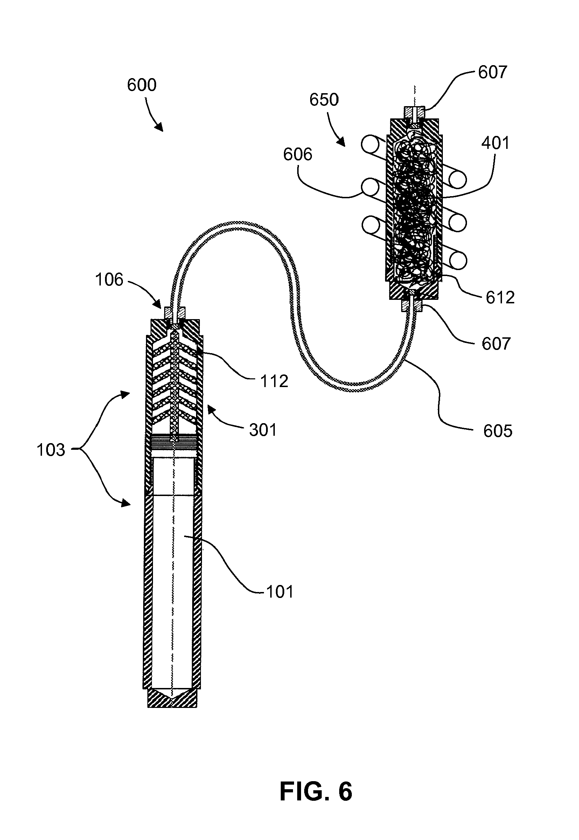

In one embodiment, a liquid sample holder may include a remote second stage separator to enhance removal of contaminants from a desorbed working fluid. Figure 6 schematically illustrates a cross-sectional view of a liquid sample holder 600 having a remote second stage separator 650, according to an embodiment of the invention. Remote second stage separator 650 includes a housing 612 that contains porous high surface area material 401 and is fluidly coupled to gas port 106 of liquid trap housing 112 by a transfer line 605. Housing 612 is substantially similar in construction to housing 103 in Figure 1. Because remote second stage separator 650 is thermally isolated from housing 103, housing 612 and porous high surface area material 401 can be held at a different temperature than housing 103, which may be elevated as part of sorption/desorption testing. In one embodiment, remote second stage separator 650 includes a cooling coil 606 to further reduce the temperature of housing 612 and porous high surface area material 401. In another embodiment, remote second stage separator 650 may be immersed in a cooling liquid or gas. With housing 612 and porous high surface area material 401 maintained at a substantially lower temperature than housing 103, porous high surface area material 401 may act as an efficient condensing surface for volatile contaminants contained in the working fluid. This is because porous high surface area material 401 has a very high surface area in contact with the working fluid and the working fluid passes over porous high surface area material 401 at a relatively low velocity.

In operation, separation of large liquid droplets from the working fluid takes place in baffle assembly 301, as described above in conjunction with Figures 3 A-C, while smaller droplets and/or volatile contaminants are removed from the working fluid by remote second stage separator 650. In one embodiment, porous high surface area material 401 also contains adsorbent and/or chemically reactive material selected to remove volatile contaminants from the working fluid. Thus, remote second stage separator 650 may remove contaminants from the working fluid thermally, chemically, and mechanically. Chemically reactive materials, once depleted, can be easily removed from remote second stage separator 650 and replaced for subsequent tests. In one embodiment, remote second stage separator 650 includes one or more filters 607 to capture very small droplets entrained in the working fluid, slow the velocity of working fluid entering remote second stage separator 650, and prevent particulate matter from escaping housing 612, such as fibers released by porous high surface area material 401.

A number of gas-sorbing sample materials can be damaged upon exposure to very small concentrations of certain contaminants. For example, metal hydrides can be passivated by concentrations of water or oxygen at the ppm level, creating a sorption barrier on the surface of the sample and rendering any subsequent sorption/desorption tests highly inaccurate. In one embodiment, remote second stage separator 650 may be used to purify a working gas as the working gas is delivered to a sample material in sample reservoir 101. In this way, damage to a sample material caused by a contaminated working fluid can be avoided. Thus, liquid sample holder 600 may be beneficially used for sorption/desorption testing of solid sample materials as well.

While the foregoing is directed to embodiments of the present invention, other and further embodiments of the invention may be devised without departing from the basic scope thereof, and the scope thereof is determined by the claims that follow

## Claims

1. A liquid sample holder, comprising:
a sample reservoir configured to hold a sample;
a housing surrounding the sample reservoir and including an opening configured to deliver a working fluid to the sample held in the sample reservoir;
a liquid trap contained in the housing and disposed above the sample reservoir; and
a conduit that defines a flow path through the liquid trap and fluidly couples the sample reservoir to the opening in the liquid sample holder to allow a working fluid to be delivered to the liquid sample.

2. The liquid sample holder of claim 1, wherein a threaded connection mechanically couples the liquid trap to the sample reservoir.

3. The liquid sample holder of claim 2, further comprising a vacuum-tight high-pressure seal formed by mechanically coupling the liquid trap to the sample reservoir with the threaded connection.

4. The liquid sample holder of claim 1, further comprising a flow restrictor disposed in the flow path.

5. The liquid sample holder of claim 4, wherein the flow restrictor is disposed in the flow path between the sample reservoir and the liquid trap.

6. The liquid sample holder of claim 4, wherein the flow restrictor is disposed in the opening.

7. The liquid sample holder of claim 4, wherein the flow restrictor comprises an in-line gas filter.

8. The liquid sample holder of claim 1, wherein the liquid trap comprises a plurality of baffles, each baffle having a gas flow opening angularly displaced by at least 10° relative to a gas flow opening of each adjacent baffle.

9. The liquid sample holder of claim 1, wherein the liquid trap comprises a porous high-surface-area material.

10. The liquid sample holder of claim 9, wherein the porous high-surface-area material comprises a chemically reactive material selected to react with volatile contaminants released from a sample material contained in the sample reservoir.

11. The liquid sample holder of claim 9, wherein the porous high-surface-area material comprises an absorbent or adsorbent material.

12. The liquid sample holder of claim 1, further comprising a second stage separator that contains a porous high-surface-area material and is fluidly coupled to the opening.

13. The liquid sample holder of claim 12, wherein the porous high-surface-area material comprises a chemically reactive material selected to react with volatile contaminants released from a sample material contained in the sample reservoir.

14. The liquid sample holder of claim 12, wherein the second stage separator is thermally isolated from the housing and is configured to be maintained at a lower temperature than the housing.

15. The liquid sample holder of claim 1, further comprising a pressure vessel configured to sealably contain the housing and fluidly couple the housing to external equipment with a single threaded connection.

16. A liquid sample holder, comprising:
a sample reservoir configured to contain a liquid sample;
a liquid trap disposed above the sample reservoir and mechanically coupled to the sample reservoir with a threaded connection; and
a conduit defining a flow path that passes through the liquid trap and fluidly couples the sample reservoir to an opening in the liquid sample holder to allow a working fluid to be delivered to the liquid sample.

17. The liquid sample holder of claim 16, further comprising a vacuum-tight high-pressure seal, wherein the vacuum-tight high-pressure seal is formed by mechanically coupling the liquid trap to the sample reservoir with the threaded connection.

18. The liquid sample holder of claim 16, wherein the liquid trap comprises a plurality of baffles, each baffle having a gas flow opening angularly displaced by at least 90° relative to a gas flow opening of each adjacent baffle.

19. The liquid sample holder of claim 16, wherein the liquid trap comprises a porous high-surface-area material.

20. The liquid sample holder of claim 16, further comprising a second stage separator that contains a porous high-surface-area material and is fluidly coupled to the opening.
